# EUROPÄISCHE PATENTSCHRIFT

(11) **EP 1 068 109 B1**
(45) Veröffentlichungstag und Bekanntmachung des Hinweises auf die Patenterteilung: **24.07.2002**
(21) Anmeldenummer: 99915550.0
(22) Anmeldetag: 09.03.1999
(51) Int. Cl.: B60R 21/32, B60R 16/02

(54) **VERFAHREN ZUR ENERGIE- UND DATENÜBERTRAGUNG IN EINEM BUSSYSTEM FÜR INSASSENSCHUTZEINRICHTUNGEN**
METHOD FOR TRANSMITTING POWER AND DATA IN A BUS SYSTEM PROVIDED FOR OCCUPANT PROTECTION DEVICES
PROCEDE DE TRANSMISSION D'ENERGIE ET DE DONNEES DANS UN SYSTEME DE BUS DESTINE A DES DISPOSITIFS DE PROTECTION DES OCCUPANTS

(30) Priorität: 28.03.1998 DE 19813955
(43) Veröffentlichungstag der Anmeldung: 17.01.2001
(73) Patentinhaber: Conti Temic microelectronic GmbH, 90411 Nürnberg (DE); ROBERT BOSCH GMBH, 70442 Stuttgart (DE)
(72) Erfinder: FENDT, Günter, D-86529 Schrobenhausen (DE); MÜLLER, Norbert, D-86529 Schrobenhausen (DE); BISCHOFF, Michael, D-85111 Adelschlag (DE); RINKENS, Johannes, D-85055 Ingolstadt (DE); SCHÄFFER, Stefan, D-86529 Schrobenhausen (DE); NITSCHKE, Werner, D-71254 Ditzingen (DE); KARL, Otto, D-71229 Leonberg (DE); BAUER, Joachim, D-71720 Oberstenfeld (DE)
(74) Vertreter: Kolb, Georg
(86) Internationale Anmeldenummer: EP9901503
(87) Internationale Veröffentlichungsnummer: WO9950106

(56) Entgegenhaltungen:
- DE-A1- 4 302 032
- DE-A1- 19 717 155
- DE-C1- 19 625 401
- US-A- 4 222 030

## Beschreibung

Die Erfindung betrifft ein Verfahren zur Energie- und Datenübertragung in einem Bussystem für Insassenschutzeinrichtungen gemäß dem Oberbegriff des Anspruchs 1. Außerdem betrifft die Erfindung ein Steuermodul zur Durchführung der Verfahren.

Aus der DE 44 41 184, der DE 196 43 013 sowie der DE 197 51 910 sind Verfahren und Vorrichtungen zur Durchführung derartiger Verfahren bekannt. Ziel ist jeweils die Absicherung der sicherheitsrelevanten peripheren Steuermodule gegen kurzzeitige Störungen, bspw. Unterbrechungen oder Überlastungen der für die Energieversorgung erforderlichen Gleichspannung aus einem Bussystem. Außerdem werden bei den gattungsgemäßen Verfahren über den selben Leitungsabschnitt neben der Energieversorgung auch die digitalen Daten durch Spannungsmodulation der Glelchspannung übertragen. Diese gleichspannungsmodulierte Datenübertragung kann des weiteren bspw. auch aus der US 4,736,367 sowie der Motorola Semiconductor Application Note AN475/D von Burri / Renard: "Single wire MI Bus controlling stepper motors", 1993 entnommen werden.

Insbesondere in der DE 196 43 013 und der DE 197 51 910 wurde das besondere Problem der Strombelastung. des Bussystems bei gleichzeitiger Energie- und Datenübertragung beschrieben. So besteht die Gefahr, daß eine Verarbeitung der Daten unmöglich wird.

Beispielsweise wird bei Bussystemen in Kraftfahrzeugen zur Energieversorgung meist eine Gleichspannung verwendet, auf die die Daten aufmoduliert werden können. Durch eine zu hohe Stromentnahme oder andere auf die Glelchspannung wirkende Faktoren können die aufmodulierten Daten nicht mehr erkannt werden.

Gerade für sicherheitsrelevante Bussysteme zur Energie- und Datenübertragung mit mehreren im Bussystem angeordneten Steuermodulen, die auch zeitlich versetzt nacheiander ausgelöst werden sollen, darf die Datenübertragung, bspw. durch eine Zündung erster Insassenschutzeinrichtungen, nicht gefährdet werden.

Dazu werden neben den in den peripheren Steuermodulen zusätzlich vorgesehenen Energiespeichern (Autarkiekondensatoren) auch Verfahren zur Bereitstellung dieser Energie, die bspw. auch zur Zündung der Insassenschutzeinrichtungen erforderlich sein kann, auf einem für das Bussystem nicht belastenden Wege dargestellt, indem die Energiespeicher vorzugsweise in den Sendepausen oder aber mit sehr geringer Stromentnahme aus dem Bussystem aufgeladen werden.

Als problematisch erweist sich dabei, daß die Energiespeicher bei einer Auslösung der Insassenschutzeinrichtung stark entladen werden und folglich somit unmittelbar danach eine Wiederaufladung aus dem Bussystem einsetzt. Selbst bei vorgesehenen Strombegrenzungsschaltungen kann diese Wiederaufladung zu einer hohen Belastung des Datenübertragungssystems führen, wenn mehrere Insassenschutzeinrichtungen gleichzeitig ausgelöst und folglich deren Energiespeicher nachgeladen werden. Steuermodule später auszulösender Insassenschutzsystem können eventuell nicht rechtzeitig wieder angesteuert werden oder eventuell vorgesehene Abfrageroutinen nicht durchgeführt werden.

Als Verfahren zum Überprüfen einer nach einem Auslösebefehl erfolgten Auslösung ist bisher nur die Widerstandsprüfung bei einem pyrotechnischen Zünder einer Insassenschutzeinrichtung bekannt. Ein intakter, noch nicht ausgelöster pyrotechnischer Zünder weist einen niedrigen Widerstand auf. Bei der Auslösung des pyrotechnischen Zünders wird der Zünddraht entweder unterbrochen, oder aber in Einzelfällen auch kurzgeschlossen. Eine Überprüfung kann somit fehlerbehaftet sein. Außerdem ist sie für andere Zündkonzepte, bspw. bei Kaltgasgeneratoren nicht anwendbar.

Aufgabe der Erfindung ist es daher, ein Verfahren der eingangs beschriebenen Art anzugeben, bei dem eine zusätzliche Belastung des Bussystems nach der Auslösung einzelner Insassenschutzeinrichtungen wirksam vermieden wird. Außerdem wird ein Verfahren zum überprüfen einer nach einem Auslösebefehl erfolgten Auslösung gezeigt, welches auf Basis eines der vorangehenden Verfahren sehr einfach und zuverlässig realisierbar ist. Außerdem soll ein Steuermodul zur Durchführung des Verfahrens angegeben werden.

Diese Aufgaben werden durch die kennzeichnenden Merkmale des Patentanspruchs 1 und 5 gelöst. Vorteilhafte Weiterbildungen sind den Unteransprüchen zu entnehmen.

Wesentlicher Erfindungsgedanke ist, daß die Aufladung bzw. Nachladung des Energiespeichers der bereits ausgelösten Insassenschutzeinrichtungen bzw. der zugehörigen steuermodule unterbrochen wird. Damit kann das Bussystem die digitalen Daten weiterhin ungestört übertragen und die Steuermodule der noch nicht ausgelösten Insassenschutzeinrichtungen ihre Daten empfangen. Durch eine hochohmige Trennung kann diese Unterdrückung besonders sicher und verlustfrei realisiert werden. Besonders bevorzugt ist, diese Wiederaufladung zumindest bis zu einem Reset-Befehl hin zu unterbrechen, durch den die peripheren Steuermodule wieder zurückgesetzt werden und nachfolgend mit dem Wiederaufladen ihrer Energiespeicher beginnen. Die nach dem Auslösen einer Insassenschutzeinrichtungen in dem ihr zugeordneten Energiespeicher befindliche Energie kann vorteilhaft auch zur Überprüfung und Erkennung einer erfolgreichen Auslösung verwendet werden. Kann bspw. aufgrund eines Leitungsbruchs zum Zünder der Insassenschutzeinrichtung hin diese nicht ausgelöst werden, so fließt die Energie nicht aus dem Energiespeicher ab. Mittels des Vergleichs mit einem Sollwert kann dies erkannt und zur Anzeige gebracht oder andere Maßnahmen eingeleitet werden.

Die Erfindung soll nachfolgend anhand von Ausführungsbeispielen und Figuren näher erläutert werden.

Kurze Beschreibung der Figuren:
- Figur 1: Prinzipskizze eines Datenübertragungssystems
- Figur 2: Skizze von Details einer Insassenschutzeinrichtung mit Steuermodul und Energiespeicher

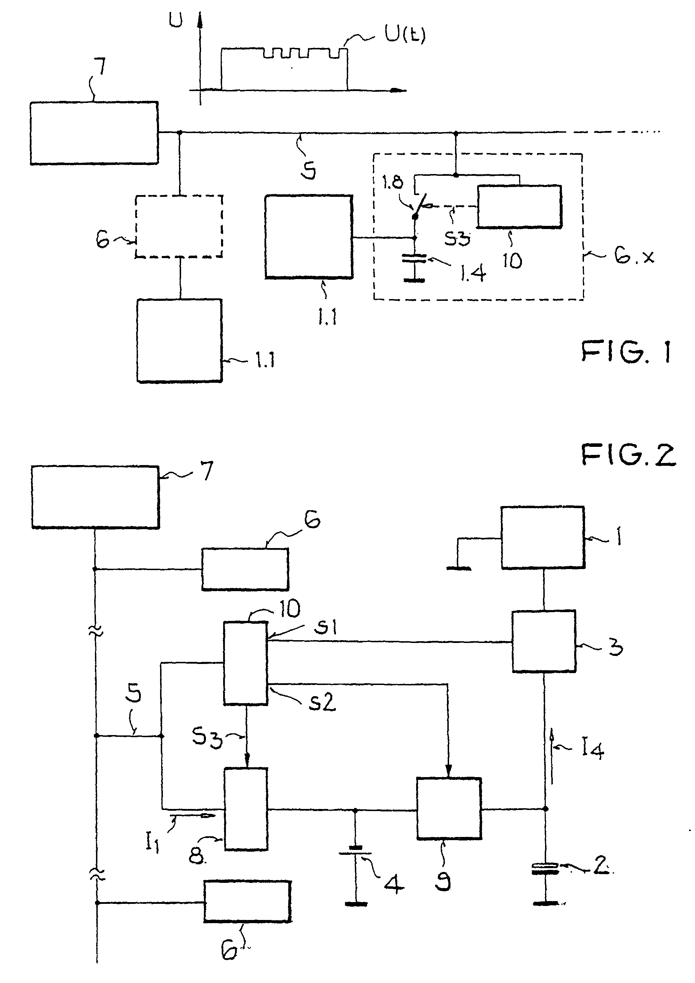

Die Figur 1 zeigt eine Prinzipskizze eines Bussystems zur Energie- und Datenübertragung. Dieses besteht aus einer Zentraleinheit 7, welche über das Bussystem 5 mit einer Vielzahl von peripheren Steuermodulen 6 verbunden ist. Ebenfalls in Fig. 1 schematisch angedeutet ist die beispielhaft ausgewählte spannungsmodulierte Energie- und Datenübertragung. Die von der Zentraleinheit 7 erzeugte Glelchspannung U(t) dient zur Energieversorgung. Auf diese werden die zu übertragenden digitalen Daten mittels Spannungsmodulation aufmoduliert.

Dazu wird die an sich konstante Gleichspannungsamplitude jeweils verändert. Die dabei verwendeten Modulations- und codierungsarten, bspw. Pulsweitenmodulation, sind aus dem Stand der Technik bekannt. Die Zentraleinheit 7 ist meist als eine Microcontrollerschaltung ausgebildet, die von sensoren, bspw. Beschleunigungssensoren, sicherheitsrelevante Signale erhält, diese verarbeitet und die Insassenschutzeinrichtungen entsprechend über das Bussystem 5 ansteuert. Den Steuermodulen 6 ist jeweils eine Insassenschutzeinrichtung 1.1 zugeordnet, die von dieser angesteuert und ggfs. auch ausgelöst wird. Die Steuermodule 6 empfangen und verarbeiten also die von der Zentraleinheit 7 übertragenen Daten, bewirken interne Prozesse, bspw. Kontroll- oder Programmierschritte und lösen ggfs. auch die Insassenschutzeinrichtung, bspw. den Airbag, aus. Außerdem können sie auch Daten zurück an die Zentraleinheit 7 senden.

Beispielhaft sind für ein peripheres Steuermodul (6.x) die zur Durchführung des Verfahrens wesentlichen Komponenten detailierter dargestellt. Hier sollen nur deren Funktionen im Zusammenhang mit dem verfahren erläutert werden. So weist jedes periphere Steuermodul 6 einen Energiespeicher 1.4 auf, der als Autarkie- oder/und Zündkondensator und/oder Akkumulator als Zwischenenergiespeicher ausgebildet werden kann. Es ist auch denkbar, daß mehrere Energiespeicher in einem Steuermodul vorgesehen sind, wie bereits aus der noch nicht offengelegten Patentanmeldungen DE 197 51 910 zu entnehmen ist. Es ist zur Entlastung des Bussystems (5) daher sinnvoll, die Wiederaufladung aller im betreffenden Steuermodul (6.x) vorhandenen Energiespeicher (1.4) nach einer Auslösung der zugehörigen Insassenschutzeinrichtung (1.1) zunächst zu unterbrechen.

Diese Unterbrechung der Wiederaufladung erfolgt bspw. durch ein steuerbares schaltmittel 1.8, welches in der mikroelektronischen Umsetzung meist aus einer Transistoranordnung gebildet wird und , wie in Fig. 2 noch erläutert wird, auch als eine steuerbare Ladeeinheit ausgebildet sein kann. Das Schaltmittel 1.8 wird von einer Steuereinheit 10 über ein Signal s3 angesteuert. Die Steuereinheit 10 ist vorzugsweise ein Microcontroller und erfüllt alle Steuerungsaufgaben innerhalb des Steuermoduls 6.x. Die Steuereinheit 10 empfängt und verarbeitet die auf dem Bussystem 5, übertragenen Daten, ordnet zu, welche für das jeweilige Steuermodul (6.x) relevant oder bestimmt sind und löst entsprechende Funktionen im steuermodul 6.x aus. zur Durchführung des Verfahrens muß die Steuereinheit 10 zumindest den Auslösebefehl an das Steuermodul 6.x erkennen. Sie unterbricht nach der Auslösung der Insassenschutzeinrichtung 1.1 mittels des Signals s3 an das steuerbare Schaltmittel 1.8 die Wiederaufladung des Energiespeichers 1.4. vorzugsweise kann die Steuereinheit 10 darüber hinaus auch einen Reset-Befehl von der Zentraleinheit 7 über das Bussystem 5 empfangen bzw. ableiten und wird danach die Unterbrechung der Wiederaufladung lösen, das Schaltmittel 1.8 über das Signal s3 also wieder schließen. Die Steuereinheit 10 ist dazu parallel zum Schaltmittel 1.8 mit dem Bussystem 5 verbunden.

Als Reset-Befehl bietet sich neben einem vorgegebenen Code-Wort insbesondere ein Spannungs-Reset an, also ein Abfall des Gleichspannungspegels um ein definiertes Maß, bspw. für eine gewisse Zeit bis annähernd Null Volt. Dieser ist sehr leicht realisier- und erkennbar. Außerdem kann ein Spannungs-Reset eine Vielzahl anderer über das Verfahren hinausgehender, jedoch logisch zeitlich zusammengehörender Prozesse auslösen, bspw. daß Löschen von Speichern, Reset des Microcontrollers des Steuermoduls etc.

Das Verfahren ist neben dem in Fig. 1 dargestellten parallelen Anschluß der Steuermodul 6 an das Bussystem 5 auch für serielle Bussysteme geeignet. Wird hierbei das durch noch nicht offengelegte Patentanmeldung DE 196 43 014 beschriebene Bussystem verwandt, bei dem die einzelnen Steuermodule in Reihe hintereinander angeordnet sind und jeweils eine eingangsseitige Prüfeinrichtung aufweisen, die vor der Spannungsweiterschaltung zunächst den elektrischen Widerstand des in Reihe nachfolgenden Teils des Bussystems prüft und die Spannung nur dann weiterschaltet, wenn dieser einen vorgegebenen Wertebereich nicht verläßt und außerdem die Spannung im Steuermodul, bspw. im Energiespeicher, erst einen für den Betrieb ausreichenden Wert erreicht hat, kann der Reset außerdem jedes Steuermodul nacheinander reaktivieren und die dynamische Belastung für das Bussystem dabei nochmals reduziert werden.

Die Figur 2 zeigt eine gegenüber Fig. 1 weitergebildete und an der DE 197 51 910 angelehnte Form einer Insassenschutzeinrichtung und deren Steuermodul mit einem Zündstromkreis, der besteht aus einem Zündenergiespeicher 2, einem Schaltmittel 3 und dem elektrischen Zünder 1.

Der Zündstrom l4 wird mittels des Schaltmittels 3 in Abhängigkeit von einem ersten Signal s1 der Steuereinheit 10 vom zündenergiespeicher 2 an den Zünder 1 verbunden und dieser somit ausgelöst. Zwischen dem Bussystem 5 und dem Zündenergiespeicher 2 ist der Zwischenspeicher 4 angeordnet, der als Akkumulator ausgeführt ist. An dem Bussystem 5 befinden sich weitere Steuermodule 6, bspw. andere insassenschutzeinrichtungen, Crashsensoren oder andere Kfz-Elektronik-Steuermodule, sowie am Strangende eine Zentraleinheit 7, welches die datenmodulierte Spannungseinspeisung in das Bussystem 5 steuert. Der Zwischenspeicher 4 wird mittels einer Ladeeinheit 8 aufgeladen, die den Ladestrom I1 auf einen vorgegebenen Maximalwert beschränkt und somit zusätzlich den Zwischenspeicher 4 vom Bussystem 5 elektrisch entkoppelt. Zwischen dem Zwischenspeicher 4 und dem Zündenergiespeicher 2 ist ein Wandler 9 angeordnet. Dieser Ist mittels eines zweiten Signals s2 von der Steuereinheit 10 in Abhängigkeit vom Betriebszustand und Auslösebefehl ansteuerbar. Die Steuereinheit 10 erfaßt die auf die Spannung des Bussystemes 5 aufmodulierten Daten und erkennt daraus den Betriebszustand sowie ggfs. einen Auslösebefehl und erzeugt die entsprechenden Signale s1 zur Ansteuerung des Schaltmittels 3, s2 an den Wandler 9 und s3 an die Ladeeinheit 8.

Wieder wird über die Steuereinheit 10 das nunmehr als Ladeeinheit 8 ausgebildete schattmittel 1.8 mittels des Signals s3 angesteuert. So wird nach der Auslösung der insassenschutzeinrichtung mittels des Zünders 1 durch das Signal 51 von der Steuereinheit 10 die Ladeeinheit 8 über das Signal s3 gesperrt, die Wiederaufladung also unterbrochen. Erkennt die Steuereinheit 10 einen Reset vom Bussystem 5, so wird über das Signal s3 die Ladeeinheit 8 wieder aktiviert.

Als Weiterbildung für beide vorangehend beschriebenen Ausführungsbeispiele bietet sich ein Verfahren zum Überprüfen einer nach einem Auslösebefehl erfolgten Auslösung eines Insassenschutzsystems an, bei dem kurzfristig nach der Unterdrückung der Aufladung des Energiespeichers dessen Energiegehalt mit einem Sollwert verglichen wird, und falls der Energiegehalt größer oder gleich dem Sollwert ist, die Auslösung als nicht erfolgt erkannt wird. Eine entsprechende Prüfeinrichtung erfaßt bspw. die. spannung des Energiespeichers (4, 1.4) und meldet dies an die Steuereinheit (10), die ihrerseits ein entsprechendes Signal über das Bussystem (5) an die Zentraleinheit (7) sendet.

## Patentansprüche

1. Verfahren zur Energie- und Datenübertragung in einem Bussystem (5) für Insassenschutzeinrichtungen (1.1), wobei mittels des Bussystems (5) digitale Daten ausgetauscht werden zwischen einer Zentraleinheit (7) und mehreren mit dieser kommunikationsfähig verbundenen Steuermodulen (6) von auslösbaren insassenschutzeinrichtungen, insbesondere in Kraftfahrzeugen, und bei dem auch eine Energieversorgung der Steuermodule (6) über das Bussystem (5) erfolgt,
bei dem die Steuermodule (6.x) mit je einem Energiespeicher (1.4 , 2) versehen sind, dessen Energieinhalt für eine begrenzte Zeitspanne für einen bestimmungsgemäßen Betrieb des jeweiligen Steuermoduls (6.x) und der von diesem Steuermodul (6.x) gesteuerten Insassenschutzeinrichtung (1.1) ausreicht, wobei der Energiespeicher (1.4 , 2) über das Bussystem (5) aufgeladen bzw. im aufgeladenen Zustand gehalten wird,
**dadurch gekennzeichnet, daß** nach erfolgter Auslösung einer Insassenschutzeinrichtung (1.1) die Aufladung des Energiespeichers (1.4 , 2) des zugehörigen Steuermoduls (6.x) unterbrochen wird.

2. Verfahren nach Anspruch 1, **dadurch gekennzeichnet, daß** nach einem Auslösebefehl an eines oder mehrere Steuermodule (6) und erfolgter Auslösung der zugehörigen Insassenschutzeinrichtungen (1.1) die Aufladung der Energiespeicher (1.4 , 2) unterbrochen und der Energiespeicher (1.4 , 2) jeweils hochohmig vom Bussystem (5) getrennt wird.

3. Verfahren nach Anspruch 1 oder 2, **dadurch gekennzeichnet, daß** die Aufladung bis zu einem Reset-Befehl an die den ausgelösten Insassenschutzeinrichtungen (1.1) zugeordneten steuermodule (6.x) unterbrochen wird.

4. Verfahren nach einem der vorangehenden Ansprüche, **dadurch gekennzeichnet, daß** zum Überprüfen der Auslösung nach einer vorgegebenen Zeit nach der Unterbrechung der Aufladung des Energiespeichers (1.4, 2) dessen Energiegehalt mit einem Sollwert verglichen wird, und falls der Energiegehalt größer oder gleich dem Sollwert ist, die Auslösung als nicht erfolgt erkannt wird, anderenfalls als erfolgt.

5. Steuermodul einer Insassenschutzeinrichtung zur Durchführung des Verfahrens nach einem der vorangehenden Ansprüche, **dadurch gekennzeichnet, daß** eine über eine Steuereinheit (10) steuerbare Ladeeinheit (8) zur Aufladung des Energiespeichers (2) vorgesehen ist, wobei diese nach einem Auslösebefehl an das dem Energiespeicher (2) zugeordnete Steuermodul (6) die Aufladung unterbricht.

## Claims

1. A method of transmitting energy and data over a bus system (5) for occupant protection devices (1.1) wherein, by means of the bus system (5), digital data is exchanged between a central unit (7) and a plurality of control modules (6) for triggerable occupant protection devices, especially in motor vehicles, said control modules being connected to and capable of communicating with said central unit, and wherein the supplying of energy to the control modules (6) is also effected over the bus system (5),
wherein the control modules (6.x) are each provided with an energy storage means (1.4, 2) whose energy reserves are sufficient for a limited time span for driving the respective control module (6.x) and the occupant protection device (1.1) controlled by this control module (6.x) in a specified manner, and wherein the energy storage means (1.4, 2) is charged and maintained in its charged state over the bus system (5),
**characterised in that** the process of charging the energy storage means (1.4, 2) for the appertaining control module (6.x) is interrupted following the successful triggering of an occupant protection device (1.1).

2. A method in accordance with Claim 1, **characterised in that** the process of charging the energy storage means (1.4, 2) is interrupted and the energy storage means (1.4, 2) is isolated from the bus system (5) by a high impedance on each occasion after the issue of a triggering command to one or more control modules (6) and following the successful triggering of the appertaining occupant protection device (1.1).

3. A method in accordance with Claim 1 or 2, **characterised in that** the charging process is interrupted until a reset command is sent to the control modules (6.x) associated with the triggered occupant protection devices (1.1).

4. A method in accordance with any of the preceding Claims, **characterised in that**, for the purposes of checking the triggering action after the elapse of a predetermined period of time after the interruption of the process of charging the energy storage means (1.4, 2), the energy reserves thereof are compared with a reference value and, in the event that the energy reserves are greater than or equal to the reference value, it is recognised that the triggering action has not occurred, but that it has occurred should this not be the case.

5. A control module for an occupant protection device for carrying out the method in accordance with any of the preceding Claims, **characterised in that**, for the purposes of charging the energy storage means (2), there is provided a charging unit (8) which is controllable by a control unit (10) and which interrupts the charging process following the issue of a triggering command to the control module (6) associated with the energy storage means (2).

## Revendications

1. Procédé pour la transmission d'énergie et de données dans un système de bus (5) pour des dispositifs (1.1) de protection de passagers, selon lequel des données numériques sont échangées au moyen du système de bus (5) entre l'unité centrale (7) et plusieurs modules de commande (6), reliés de manière à pouvoir communiquer avec cette unité, de dispositifs déclenchables de protection de passagers, notamment dans des véhicules automobiles, et selon lequel une alimentation en énergie des modules de commande (6) s'effectue également au moyen du système de bus (5), et selon lequel les modules de commande (6.x) sont équipés chacun d'un accumulateur d'énergie (1.4, 2) dont le contenu en énergie suffit pendant un intervalle de temps limité pour un fonctionnement conforme aux spécifications du module de commande respectif (6.x) et du dispositif (1.1) de protection de passager commandé par ce module (6.x), l'accumulateur d'énergie (1.4, 2) étant chargé et étant maintenu à l'état chargé par l'intermédiaire du système de bus (5),
**caractérisé en ce qu'**après le déclenchement d'un dispositif (1.1) de protection de passager, la charge de l'accumulateur d'énergie (1.4, 2) du module de commande associé (6.x) est interrompue.

2. Procédé selon la revendication 1, **caractérisé en ce qu'**après un ordre de déclenchement envoyé à un ou à plusieurs modules de commande (6) et une fois exécuté le déclenchement des dispositifs associés (1.1) de protection de passagers, la charge des accumulateurs d'énergie (1.4, 2) est interrompue et l'accumulateur d'énergie (1.4, 2) est respectivement séparé, par une forte valeur ohmique, des systèmes de bus (5).

3. Procédé selon la revendication 1 ou 2,
**caractérisé en ce que** la charge est interrompue jusqu'à un ordre de remise à l'état initial envoyé aux modules de commande (6.x) associés aux dispositifs déclenchés (1.1) de protection de passagers.

4. Procédé selon l'une des revendications précédentes, **caractérisé en ce que** pour le contrôle du déclenchement au bout d'une durée prédéterminée après l'interruption de la charge d'accumulateur d'énergie (1.4, 2), le contenu en énergie de cet accumulateur d'énergie est comparé à une valeur de consigne, et que dans le cas où le contenu en énergie est supérieur ou égal à la valeur de consigne, le déclenchement est identifié comme non exécuté, sinon il est identifié comme étant exécuté.

5. Module de commande d'un dispositif de protection des passagers pour la mise en oeuvre du procédé selon les revendications précédentes, **caractérisé en ce qu'**il est prévu une unité de charge (8), qui peut être commandée au moyen de l'unité de commande (10) et sert à charger l'accumulateur d'énergie (2), cet accumulateur d'énergie interrompant la charge après un ordre de déclenchement appliqué au module de commande (6) associé à l'accumulateur d'énergie (2).
